# EUROPÄISCHE PATENTSCHRIFT

(11) **EP 2 509 830 B1**
(45) Veröffentlichungstag und Bekanntmachung des Hinweises auf die Patenterteilung: **15.10.2014**
(21) Anmeldenummer: 10798280.3
(22) Anmeldetag: 06.12.2010
(51) Int. Cl.: B60Q 5/00, B60R 21/203

(54) **FAHRZEUGLENKRAD**
VEHICLE STEERING WHEEL
VOLANT DE VÉHICULE

(30) Priorität: 08.12.2009 DE 102009047690
(43) Veröffentlichungstag der Anmeldung: 17.10.2012
(73) Patentinhaber: Takata AG, 63743 Aschaffenburg (DE)
(72) Erfinder: WEIGAND, Steffen, 63739 Aschaffenburg (DE); HANS, Andreas, 63741 Aschaffenburg (DE); HOFMANN, Thomas, 63739 Aschaffenburg (DE)
(74) Vertreter: Müller, Wolfram Hubertus
(86) Internationale Anmeldenummer: PCT/EP2010/068939
(87) Internationale Veröffentlichungsnummer: WO 2011/069946

(56) Entgegenhaltungen:
- EP-A2- 1 834 844
- WO-A1-2005/080143
- DE-U1- 20 103 891
- US-B1- 6 244 620

## Beschreibung

Die Erfindung betrifft ein Fahrzeuglenkrad gemäß dem Oberbegriff des Anspruchs 1.

Es ist bekannt, ein Gassackmodul in ein Lenkrad eines Fahrzeugs zu integrieren. Dabei muss gewährleistet sein, dass der Fahrer des Fahrzeugs durch Drücken einer in der Mitte des Lenkrades befindlichen Abdeckung eine Fahrzeughupe auslösen kann.

Zur Realisierung einer Hupenfunktion bei Lenkrädern mit integrierten Gassackmodulen sind Lösungen mit schwimmend gelagerten Gassackmodulen bekannt, bei denen bei einer Druckbeaufschlagung das Gassackmodul insgesamt axial ausgelenkt wird. Nachteile der Lösungen mit schwimmend gelagerten Gassackmodulen bestehen darin, dass die Beaufschlagungskräfte relativ hoch und der notwendige Betätigungsweg relativ groß sind.

Aus der WO 2005/080143 A1, gemäß den Oberbegriff des Patentanspruchs 1, ist ein Fahrzeuglenkrad bekannt, das Scharniermittel zur schwenkbaren Lagerung des Modulgehäuses eines Gassackmoduls am Lenkrad aufweist. Ein Auflagepunkt des Gassackmoduls ist am Lenkradskelett verrastet und dient als Drehpunkt für eine Verschwenkung des Modulgehäuses. Diese Lösung ist jedoch aus Platzgründen nicht in jedem Design umsetzbar und relativ aufwendig, da drei Verbindungen mit dem Lenkradskelett benötigt werden. Auch können Klappergeräusche auftreten.

Aus der EP 1 834 844 A2 ist ein Fahrzeuglenkrad bekannt, bei dem ein Gassackmodul eine Abdeckkappe und ein Modulgehäuse aufweist und die Abdeckkappe des Gassackmoduls im Bereich des Lenkradkranzes im Lenkradschaum verrastet und zur Auslösung einer Hupenfunktion um diese Verrastung schwenkbar ausgebildet ist. Das Modulgehäuse ist nicht mit dem Lenkradskelett verbunden.

Ausgehend von diesem Stand der Technik liegt der vorliegenden Erfindung die Aufgabe zugrunde, ein Fahrzeuglenkrad mit integriertem Gassackmodul bereitzustellen, das in einfacher und flexibler Weise das Auslösen einer Hupenfunktion ermöglicht.

Diese Aufgabe wird erfindungsgemäß durch ein Fahrzeuglenkrad mit den Merkmalen des Anspruchs 1 gelöst. Ausgestaltungen der Erfindung sind in den Unteransprüchen angegeben.

Danach zeichnet sich die erfindungsgemäße Lösung durch die technische Lehre aus, bei einem in ein Lenkrad integrierten Gassackmodul, das ein Modulgehäuse und eine Modulabdeckung umfasst, am Modulgehäuse ausgebildete Schwenkmittel, um die das Modulgehäuse relativ zum Lenkradskelett verschwenkbar ist, im Lenkradschaum des Lenkrads anzuordnen und zu lagern. Es ist somit die Lagerung des Modulgehäuses nicht am Lenkradskelett, sondern im Lenkradschaum vorgesehen.

Die erfindungsgemäße Lösung ist mit einer Vielzahl von Vorteilen verbunden. Sie ist kostengünstig, da ein Lager im Lenkradschaum in einfacher und kostengünstiger Weise beim Umschäumen des Lenkradskeletts bereitgestellt werden kann. Sie ermöglicht gleichzeitig in flexibler Weise eine Lagerung eines Modulgehäuses an einem Lenkrad, da durch eine geeignete Formgebung des Lenkradschaums in flexibler Weise Bereiche bereitgestellt werden können, die einer schwenkbaren Lagerung des Modulgehäuses dienen können. Beispielsweise ist es problemlos möglich, gesondert ausgebildete Schaumteile an einer Lenkradspeiche vorzusehen, in der ein oder mehrere Lager für die Schwenkmittel ausgebildet sind. Ebenso kann vorgesehen sein, im Bereich der Lenkradnabe ein Schaumteil oder einen Schaumbereich für die Lagerung der Schwenkmittel vorzusehen.

Ein weiterer Vorteil der vorliegenden Erfindung besteht darin, dass das Modulgehäuse in einem einem Fahrer abgewandten Bereich und nahe des Lenkradbodens am Lenkrad befestigt werden kann. Dies ist aufgrund der Ausbildung der Schwenkmittel am Modulgehäuse selbst der Fall. So können die Schwenkmittel beispielsweise an der unteren, einem Fahrer abgewandten Seite des Modulgehäuses an diesem ausgebildet und im Lenkradschaum gelagert sein. Eine Lagerung des Modulgehäuses in einem einem Fahrer abgewandten Bereich und nahe des Lenkradbodens wird weiter unterstützt, wenn das Modulgehäuse im Bereich mindestens einer Speiche des Lenkradskelettes oder im Bereich der Lenkradnabe im Lenkradschaum gelagert ist. Diese einem Fahrer und dem Lenkradkranz abgewandte Lagerung erlaubt es, den Lenkradkranz von entsprechenden Lagermitteln und für andere Elemente wie Bedienelemente freizuhalten.

Eine bevorzugt vorgesehene Lagerung des Modulgehäuses im Bereich der Lenkradspeichen oder im Bereich der Lenkradnabe weist darüber hinaus den Vorteil auf, dass durch die Kinematik die Betätigungskräfte zum Auslösen eines Hupvorgangs und dementsprechend die Spaltmaße zwischen dem Gassackmodul und dem Lenkrad minimiert werden können. Dabei wird der radiale Abstand zwischen der mindestens einen Schwenkachse und den Kontaktmitteln zum Auslösen einer Fahrzeughupe aufgrund der Verjüngung des Lenkrads vom Lenkradkranz hin zur Lenkradnabe umso kleiner, je weiter die Schwenkachse vom Lenkradkranz beabstandet und in Richtung der Lenkradnabe ausgeführt ist. Dabei gilt, dass je kleiner dieser radiale Abstand ist, desto geringer auch die Verschwenkung des Gassackmoduls ist, die dieses bei einem Hupvorgang erfährt, so dass die Spaltmaße zwischen dem Gassackmodul und dem Lenkrad weiter minimiert werden können.

In einer Ausgestaltung der vorliegenden Erfindung ist vorgesehen, dass die Schwenkmittel eine Schwenkbewegung des Modulgehäuses entlang genau einer Schwenkachse ermöglichen. Das Verschwenken des Modulgehäuses um eine Achse im Lenkradschaum ermöglicht es, die Kinematik zur Auslösung einer Hupenfunktion weiter zu vereinfachen und zu minimieren. Eine Verschwenkung nur um eine Achse weist des Weiteren den Vorteil auf, dass eine Gassackabdeckung oder Kappe, die mit dem Modulgehäuse verbunden bzw. auf dieses aufgesetzt ist, an ihren Rändern einen nur minimalen Weg relativ zu dem Lenkrad verschwenkt wird, so dass die entsprechenden Spaltmaße wiederum minimiert werden können.

Zur Realisierung einer Schwenkbewegung des Modulgehäuses entlang genau einer Schwenkachse ist in einem Ausführungsbeispiel vorgesehen, dass die Schwenkachse durch mindestens zwei auf einer Achse liegende, von einander beabstandete und im Lenkradschaum um diese Achse drehbare Befestigungselemente gebildet sind. Bei den Befestigungselementen handelt es sich beispielsweise um zylindrische Wellenstümpfe oder Kugelköpfe, die am Modulgehäuse ausgebildet sind und beispielsweise gegenüber dem eigentlichen Modulgehäuse vorstehen, so dass sie im Lenkradschaum gelagert werden können. Ebenfalls kann vorgesehen sein, dass es sich bei den Befestigungselementen um Elemente handelt, die rastbar mit dem Lenkradschaum verbindbar sind. Beispielsweise kann es sich um herkömmliche Verrastungspins handeln.

Der Lenkradschaum bildet erfindungsgemäß mindestens eine Lageraufnahme zur Lagerung der am Modulgehäuse ausgebildeten Schwenkmittel aus. Dabei kann vorgesehen sein, dass der Lenkradschaum jedenfalls im Bereich der Lageraufnahme durch ein gesondertes, beispielsweise an mindestens einer der Speichen oder im Bereich der Lenkradnabe des Lenkrads ausgebildetes Schaumteil gebildet ist. Das Schaumteil kann an das Design des Modulgehäuses angepasst sein und gewährleisten, dass bei jedem Modulgehäusedesign in einfacher Weise eine Lagerung des Modulgehäuses im Lenkradschaum möglich ist. Das Schaumteil ist dabei zwar ein Teil mit einer gesonderten Formgebung, wird jedoch bevorzugt mit der Umschäumung des Lenkrades hergestellt.

Dabei ist möglich, dass ein solches Schaumteil sich im Bereich einer Speiche erstreckt oder aber auch sich zwischen zwei benachbarten Speichen erstreckt. Auch kann vorgesehen sein, dass eine Speiche beabstandete Streben aufweist, zwischen denen sich ein solches Schaumteil erstreckt. Ebenso kann sich ein solches Schaumteil im Bereich des Lenkradbodens erstrecken.

In einer weiteren Ausgestaltung der Erfindung weisen die Befestigungsmittel mindestens zwei Befestigungszapfen auf, die entlang einer Achse angeordnet sind, die parallel zu der Schwenkachse verläuft. Die mittels der Befestigungsmittel sowie geeignet angeordneter Federmittel bereitgestellte schwimmende Lagerung des Modulgehäuses im Lenkrad ist dabei derart, dass bei einem Verschwenken des Modulgehäuses relativ zum Lenkradskelett die Befestigungsmittel in Form der mindestens zwei Befestigungszapfen in gleicher Weise im Rahmen des durch die schwimmende Lagerung bereitgestellten Spiels verschwenkt werden. Dies erlaubt es, die Befestigungszapfen in gleicher Weise auszuführen und mit dem Lenkrad zu verbinden.

In einer weiteren Ausgestaltung sind die Befestigungsmittel mit dem Lenkrad verrastbar, so dass das Gassackmodul in einfacher Weise am Lenkrad montiert werden kann. Ein Rastvorgang der Befestigungsmittel erfolgt dabei in einer Ausgestaltung im Bereich der Lenkradnabe des Lenkrads.

Zu der bereits erwähnten schwimmenden Lagerung des Modulgehäuses am Lenkrad ist mindestens ein Federelement vorgesehen, das sich zwischen dem Modulgehäuse und der Lenkradnabe oder einem mit diesem verbundenen Teil abstützt und das ein federkraftbeaufschlagtes Spiel zur Bewegung des Modulgehäuses relativ zum Lenkrad bereitstellt. Dieses federkraftbeaufschlagte Spiel erlaubt ein erfindungsgemäßes Schwenken des Modulgehäuses um die im Bereich mindestens einer Lenkradspeiche im Lenkradschaum der Speiche bereitgestellte Lagerung.

Das Gassackmodul weist eine Modulabdeckung oder Kappe auf, die bei in ein Fahrzeug eingebautem Lenkrad einem Fahrer des Fahrzeuges zugewandt ist. Die Modulabdeckung ist das Teil des Gassackmoduls, auf das der Fahrer zum Auslösen einer Hupenfunktion einen manuellen Druck ausübt. Da die Modulabdeckung mit dem Modulgehäuse verbunden ist, überträgt sich dieser Druck auf das Modulgehäuse und wird dort in eine Schwenkbewegung umgesetzt. Die Modulabdeckung selbst ist erfindungsgemäß jedoch nicht unmittelbar mit dem Lenkrad verbunden und weist insbesondere keine Befestigung oder Verrastung im Lenkradschaum auf. Die im Lenkradschaum des Lenkrads gelagerten Schwenkmittel sind am Modulgehäuse, nicht dagegen an der Modulabdeckung ausgebildet.

Die am Modulgehäuse ausgebildeten Schwenkmittel sind in einer Ausgestaltung einstückig mit dem Modulgehäuse gebildet und als Vorsprünge ausgebildet. Beispielsweise ist das Modulgehäuse einschließlich der Schwenkmittel als Spritzgussteil hergestellt. Statt einer einstückigen Ausbildung kann grundsätzlich jedoch auch vorgesehen sein, dass die Schwenkmittel als gesonderte Teile hergestellt und beispielsweise durch Verschrauben oder Verschweißen mit dem Modulgehäuse verbunden werden.

Die elektrischen Kontaktmittel, die eine Fahrzeughupe auslösen, sind in einer Ausgestaltung der Erfindung an der einem Fahrer des Fahrzeugs abgewandten Seite des Modulgehäuses an diesem angeordnet. Bei Verschwenken des Modulgehäuses werden die elektrischen Kontaktmittel geschlossen, so dass die Hupenfunktion ausgelöst wird.

In einer weiteren Ausgestaltung sind die Schwenkmittel über Schnappverbindungen im Lenkradschaum angeordnet und gelagert.

Die Erfindung wird nachfolgend unter Bezugnahme auf die Figuren der Zeichnung anhand eines Ausführungsbeispieles näher erläutert. Es zeigen:
- Fig. 1: eine Seitenansicht eines Ausführungsbeispiels eines Modulgehäuses eines in ein Lenkrad integrierten Gassackmoduls;
- Fig. 2: eine perspektivische Ansicht von schräg unten des Modulgehäuses der Figur 1;
- Fig. 3: eine Seitenansicht des Modulgehäuses der Figuren 1 und 2, wobei das Modulgehäuse in einem Fahrzeuglenkrad schwenkbar befestigt ist;
- Fig. 4: eine detailliertere Darstellung der Anordnung der Figur 3;
- Fig. 5: die Anordnung der Figur 4, wobei zusätzlich eine Schwenkachse und eine Schwenkrichtung zum Verschwenken des Modulgehäuses relativ zu dem Lenkrad dargestellt ist;
- Fig. 6: eine Detaildarstellung der Anordnung der Figur 5, wobei die schwenkbare Lagerung des Modulgehäuses im Lenkradschaum der Speiche vergrößert dargestellt ist;
- Fig. 7: eine Darstellung der elektrischen Kontaktmittel des Lenkrads zum Auslösen einer Fahrzeughupe;
- Fig. 8: eine perspektivische Ansicht der Fahrzeugnabe eines weiteren Ausführungsbeispiels eines Lenkrads; und
- Fig. 9: eine perspektivische Ansicht eines Gassackmoduls des weiteren Ausführungsbeispiels.

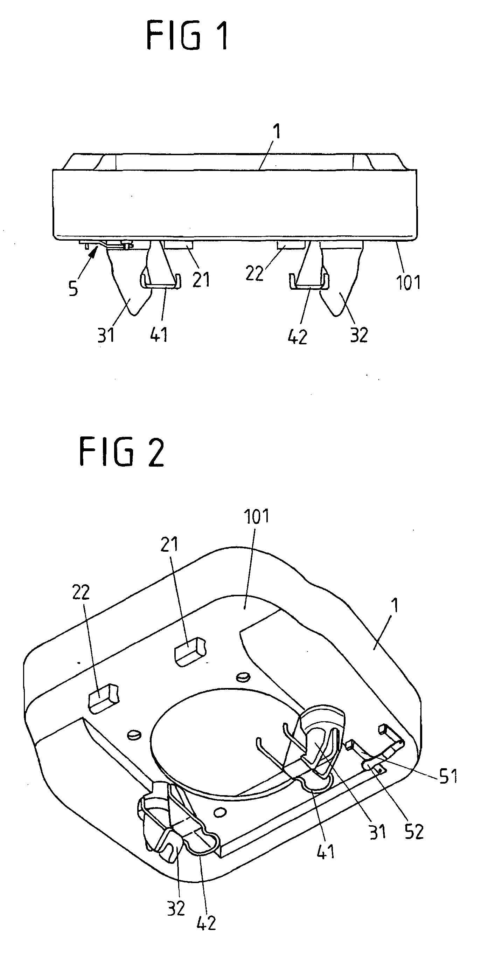

Die Figur 1 zeigt ein Modulgehäuse 1 eines in ein Lenkrad integrierten Gassackmoduls. Als Modulgehäuse wird dabei jede Struktur eines Gassackmoduls bezeichnet, die der Befestigung und/oder Aufnahme eines Gasgenerators und/oder eines Gassacks des Gassacksmoduls dient. Beispielsweise umfasst ein Modulgehäuse im Sinne der vorliegenden Erfindung auch einen Gasgeneratorträger, der der Anordnung und Befestigung eines Gasgenerators des Gassackmoduls dient. Ebenso bezeichnet ein Modulgehäuse ein Gehäuse, in oder an dem ein Gassack des Gassackmoduls angeordnet ist. Ein Modulgehäuse kann auch sowohl der Anordnung eines Gassacks als auch der Befestigung eines Gasgenerators dienen.

In der Figur 1 sind ein Gassack und ein Gasgenerator des Gassackmoduls nicht gesondert dargestellt. An sich übliche, im Stand der Technik bekannte Gasgeneratoren und Gassackanordnungen können in Verbindung mit dem dargestellten Modulgehäuse verwendet werden.

Ebenfalls nicht dargestellt in der Figur 1 ist eine Modulabdeckung oder Kappe, die bei einem in ein Fahrzeug eingebauten Lenkrad dem Fahrer zugewandt ist und die ein Fahrer zum Auslösen eines Hupvorgangs mit einem Druck beaufschlagt. Eine solche Abdeckung ist fest mit dem in der Figur 1 dargestellten Modulgehäuse 1 verbunden, nicht jedoch mit anderen Teilen des Fahrzeuglenkrads.

Das Modulgehäuse 1 ist im dargestellten Ausführungsbeispiel im Wesentlichen rechteckförmig ausgebildet, wie auch der Darstellung der Figur 2 entnommen werden kann. Eine solche rechteckförmige Ausbildung ist lediglich beispielhaft zu verstehen. Beispielsweise können ebenso eine runde oder mehreckige Formen vorgesehen sein.

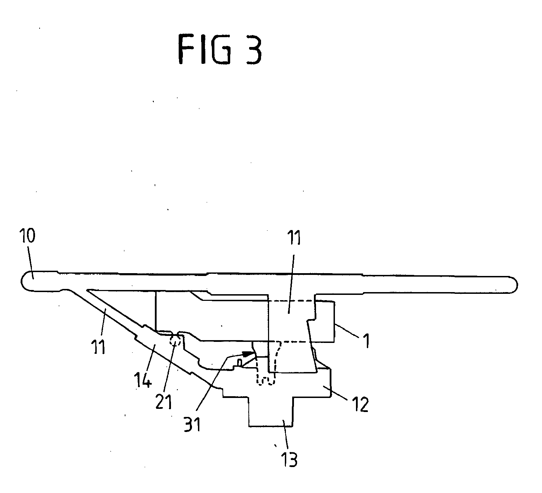

Das Modulgehäuse 1 weist Befestigungsmittel 31, 32 auf, die durch zwei Befestigungszapfen gebildet sind, die von der Unterseite 101 des Modulgehäuses 1 abstehen. Die Unterseite 101 des Modulsgehäuses ist dabei diejenige Seite, die bei in ein Lenkrad eingebautem Gassackmodul dem Fahrer abgewandt ist. Die Befestigungsmittel 31, 32 dienen der schwimmenden Lagerung des Modulgehäuses 1 am Lenkrad, und im Bereich der Lenkradnabe des Lenkrads, wie anhand der Figuren 3 bis 5 noch erkennbar sein wird. Zur schwimmenden Lagerung sind des weiteren Federelemente (in den Figuren 1 und 2 nicht dargestellt) vorgesehen, die ein federkraftbeaufschlagtes Spiel zur Bewegung des Modulgehäuses 1 relativ zum Lenkrad im Rahmen einer Schwenkbewegung des Modulgehäuses 1 bereitstellen.

Wie in der Figur 2 dargestellt ist, ist jedem der Befestigungszapfen 31, 32 eine Metallklammer 41, 42 zugeordnet, die zwei Bügel aufweist, mittels der die Zapfen 31, 32 in entsprechenden Aussparungen einer Lenkradnabe verrastbar sind. Die Metallklammern 41, 42 werden dabei im Lenkradskelett vormontiert und halten das Gassackmodul bei der Montage im Lenkrad.

Das Modulgehäuse 1 weist des Weiteren Schwenkmittel in Form zweier Befestigungs- und Lagervorsprünge 21, 22 auf, die von der Unterseite 101 des Modulgehäuses 1 abstehen. Die Befestigungs- und Lagervorsprünge 21, 22 sind entlang einer Schwenkachse angeordnet. Auch die beiden Befestigungszapfen 31, 32 sind entlang einer Achse angeordnet. Die beiden Achsen verlaufen dabei parallel zueinander.

Auf der Unterseite 101 des Modulgehäuses 1 sind des Weiteren elektrische Kontaktmittel 5 angeordnet, die durch einen am Modulgehäuse befestigten unteren Kontakt 51 und einen zu diesem bewegbaren oberen Kontakt 52 gebildet sind.

Die Figur 3 zeigt schematisch und ohne die Darstellung von Details die Anordnung eines Modulgehäuses 1 gemäß den Figuren 1 und 2 in einem Fahrzeuglenkrad. Das Lenkrad weist in an sich bekannter Weise einen Lenkradkranz 10, mehrere (im dargestellten Ausführungsbeispiel drei) Lenkradspeichen 11 und eine Lenkradnabe 12 auf, die auch als Lenkradboden oder Lenkradtopf bezeichnet werden kann. Im Bereich der Lenkradnabe 12 befindet sich ein Ankoppelstück 13 zur Verbindung des Lenkrades mit einer Lenkwelle (nicht dargestellt).

Das Lenkrad weist in an sich bekannter Weise ein Lenkradskelett auf, das zumindest teilweise mit Lenkradschaum umhüllt ist. Typischerweise sind der Lenkradkranz 10 und Teile der Lenkradspeichen 11 mit Lenkradschaum umhüllt. Im dargestellten Ausführungsbeispiel weist eine der Lenkradspeichen 11 ein Schaumteil 14 auf, das die Lenkradspeiche 11 in einem unteren Bereich und beabstandet vom Lenkradkranz 10 umgibt. Der Lenkradschaum dieses Schaumteils 14 bildet eine Lageraufnahme zur drehbaren Lagerung der in den Figuren 1 und 2 dargestellten Befestigungs- und Lagervorsprünge 21, 22 des Modulgehäuses 1 aus. In der Seitendarstellung der Figur 3 ist der eine Vorsprung 21 dargestellt.

Ebenfalls dargestellt in der Figur 3 ist einer der Befestigungszapfen 31, der rastbar und dabei schwimmend gelagert mit der Lenkradnabe 12 verbunden ist.

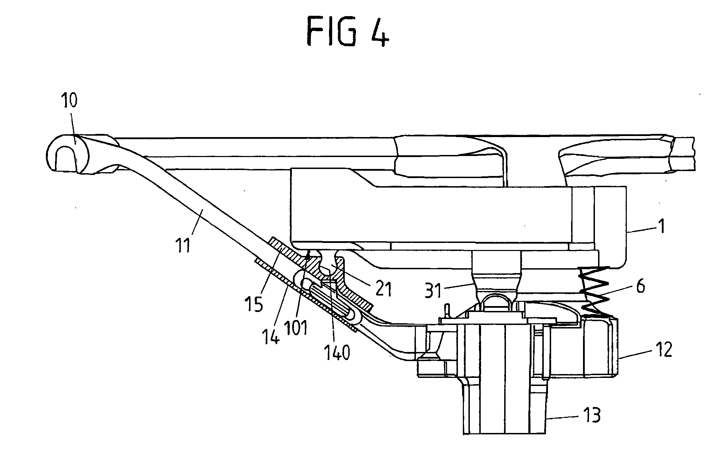

Die Figur 4 zeigt die Anordnung der Figur 3 unter Darstellung zusätzlicher Details. Es ist erkennbar, dass der Lenkradschaum 15 in dem Bereich, in dem er ein Lager für die Schwenkmittel 21, 22 des Modulgehäuses 1 bereitstellt, in einem Schaumteil 14 ausgebildet ist. Es wird jedoch darauf hingewiesen, dass die Bereitstellung des Lagers in einem gesonderten Schaumteil 14 nur beispielhaft zu verstehen ist. Ebenso kann das im Lenkradschaum 15 gebildete Lager in einem kontinuierlich mit dem Lenkradschaum 15 des Lenkradrads ausgebildeten Schaumbereich ausgebildet sein.

Der Lenkradschaum 15 stellt Lageraufnahmen 140 zur Aufnahme der Befestigungs- und Lagervorsprünge 21, 22 des Modulgehäuses 1 bereit. In diese Lageraufnahmen 140 sind mittels von Schnappverbindungen die Vorsprünge 21, 22 des Modulgehäuses 1 eingerastet. Das Lager ist dabei in einer Ausgestaltung als Axial- und Radiallager ausgebildet, in einer anderen Ausgestaltung lediglich als Radiallager.

Die in den Lenkradschaum 15 eingerasteten Vorsprünge 21 weisen eine Form derart auf, dass die Unterseite 101 des Modulgehäuses 1 im Bereich der Vorsprünge 21, 22 bei einem Schwenken des Modulgehäuses 1 in ihrer vertikalen Lage im Wesentlichen unverändert bleibt und lediglich rotiert. Hierzu sind die Vorsprünge 21, 22 beispielsweise im Querschnitt kreisförmig, z. B. als Wellenstümpfe, d. h. als Vorsprünge einer bestimmten Länge mit einer zylindrischen Form ausgebildet. Ebenfalls möglich ist es beispielsweise, die Vorsprünge 21, 22 als Kugelköpfe auszubilden. Da zwei Vorsprünge 21, 22 vorgesehen sind, ist in jedem Fall gewährleistet und sichergestellt, dass eine Rotation des Modulgehäuses 1 um das Lager 140, 21, 22 entlang nur einer Achse möglich ist.

In der Figur 4 ist des Weiteren ein Federelement 6 schematisch dargestellt. Das Federelement 6 dient der Bereitstellung einer schwimmenden Lagerung des Modulgehäuses am Lenkrad. Das Federelement 6 stellt ein federbeaufschlagtes Spiel zur axialen Bewegung des Modulgehäuses 1 relativ zur Lenkradnabe 12 bereit. In einer Ausgestaltung sind zwei Federelemente 6 vorgesehen, entsprechend der Anzahl der Befestigungszapfen 31, 32. Die Federelemente 6 können dabei koaxial, benachbart oder auch beabstandet zu den Befestigungszapfen angeordnet sein. Besonders effektiv können sie eingesetzt werden, wenn sie entsprechend der Darstellung der Figur 4 an dem Ende des Modulgehäuses 1 ansetzen, das dem Ende, das die Vorsprünge 21, 22 ausbildet, gegenüberliegend ist.

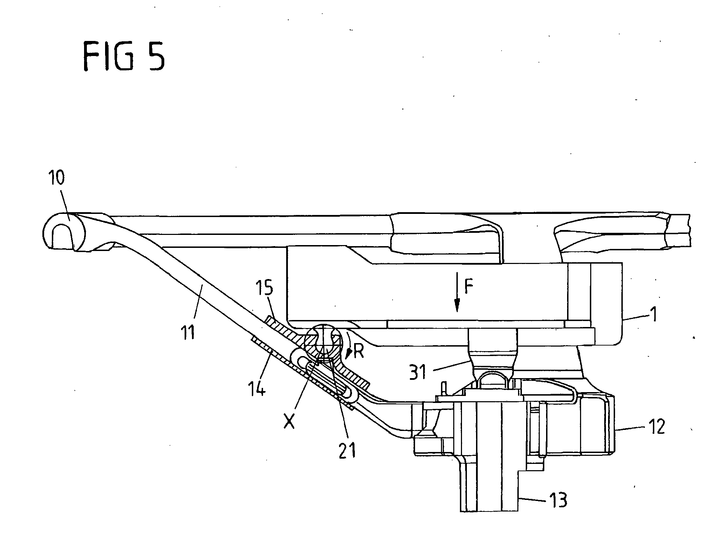

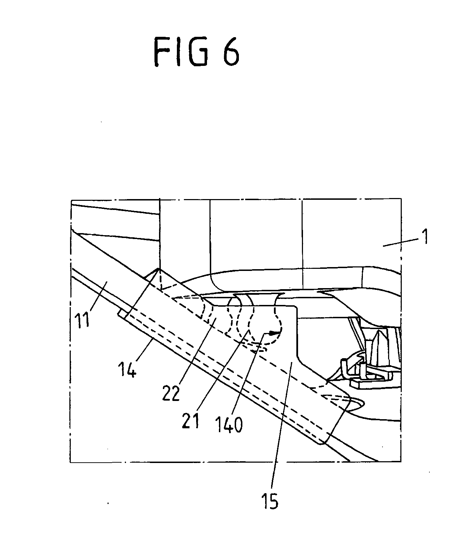

Die Rotation des Modulgehäuses 1 um das Lager 140, 21,22 entlang einer Achse ist in der Figur 5 weitergehend dargestellt, die zusätzlich die Schwenkachse X und eine Schwenkrichtung R angibt. Ansonsten entspricht die Darstellung der Figur 5 der Darstellung der Figur 6, wobei jedoch die in der Figur 4 schematisch dargestellte Feder 6 nicht dargestellt ist.

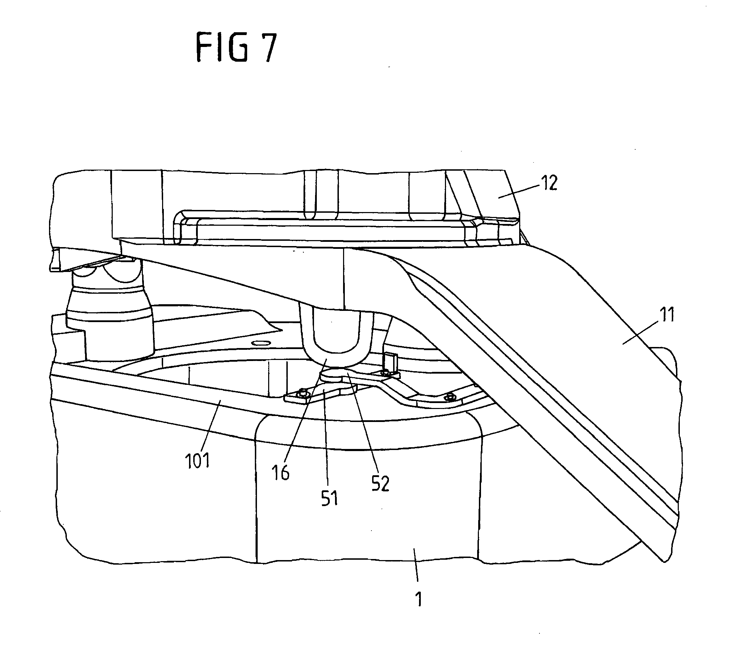

Im Falle des Ausübens eines Druckes durch einen Fahrer auf eine mit dem Modulgehäuse verbundene Modulabdeckung oder Kappe (nicht dargestellt) erfährt das Modulgehäuse 1 eine Kraft F in axialer Richtung. In diese Kraft F führt entgegen der durch die Federelemente bereitgestellten Federkraft zu einem Verschwenken des Modulgehäuses 1 entlang des Pfeils R um die Schwenkachse X. Dabei werden, wie in Bezug auf die Figur 7 noch erläutert werden wird, die elektrischen Kontakte zum Auslösen einer Fahrzeughupe geschlossen, so dass ein Hupvorgang ausgelöst wird. Die beschriebene Lösung erlaubt die Erzeugung eines Hupvorgangs unter Bereitstellen einer minimalen Kinematik zwischen dem Modulgehäuse 1 und dem Kraftfahrzeuglenkrad und minimaler Spaltmaße zwischen dem Gassackmodul und dem Lenkrad.

Nach der Beendigung der Druckbeaufschlagung werden die elektrischen Kontakte durch die Rückstellkräfte der Federelemente und das dadurch bewirkte Zurückschwenken des Modulgehäuses 1 um die Schwenkachse X unterbrochen und das Hornsignal erlischt.

Die Figur 6 zeigt eine leicht perspektivische Detailansicht der Lagerung des Modulgehäuses 1 im Fahrzeugschaum 15, wobei beide Befestigungs- und Lagervorsprünge 21, 22 und entsprechende Lageraufnahmen 140 im Fahrzeugschaum 15 dargestellt sind. Die Befestigungs- und Lagervorsprünge 21, 22 sind über Schnappverbindungen im Lenkradschaum 15 gelagert. Dies ist möglich, da der Lenkradschaum 15 elastische Eigenschaften aufweist.

Der Lenkradschaum 15 ist in einem Ausführungsbeispiel durch einen dauerelastischen Weichschaum beispielsweise aus Polyurethan gebildet.

Die Figur 7 zeigt das Schließen der elektrischen Kontaktmittel 5 zum Auslösen einer Hupenfunktion. Hierzu ist an der Lenkradnabe 12 ein vorstehender Pin 16 ausgebildet. Der Pin 16 kann mit Schaum überzogen sein, um eine Isolierung zum Skelett zu erreichen. Bei Verschwenken des Modulgehäuses 1 aufgrund einer Druckbeaufschlagung drückt der vorstehende Pin 16 den oberen Kontakt 52 gegen den unteren Kontakt 51, so dass ein elektrischer Kreis geschlossen und ein Hupensignal ausgelöst wird.

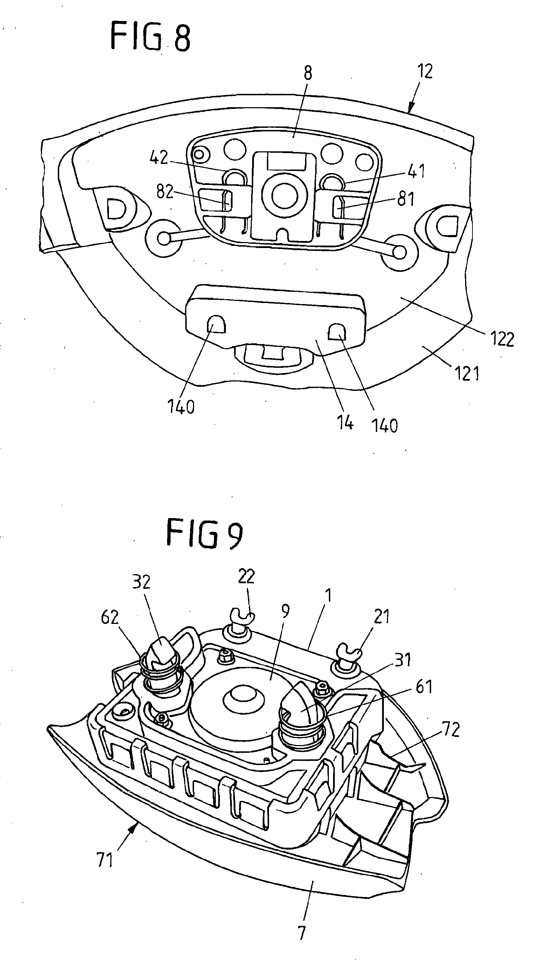

Die Figuren 8 und 9 zeigen ein weiteres Ausführungsbeispiel eines Lenkrads, wobei die Figur 8 die Lenkradnabe 12 des Lenkrads und die Figur 9 ein auf der Lenkradnabe 12 zu montierendes Gassackmodul darstellt.

Die Lenkradnabe 12 weist einen Bodenbereich 122 und eine diesen umgebende Wandung 121 auf, so dass die Lenkradnabe 12 topfartig ausgebildet ist und ein Volumen zur Aufnahme eines Gassackmoduls bereitstellt. Sie wird im Folgenden als Lenkradtopf 12 bezeichnet.

In der 6-Uhr-Position des Lenkrades und angrenzend an die Wandung 121 ist im Lenkradtopf 12 ein Schaumteil 14 angeordnet, das wie in Bezug auf die Figuren 1 bis 7 beschrieben der Lagerung von Schwenkmitteln des Modulgehäuses dient. Das Schaumteil 14 weist hierzu zwei Lageraufnahmen 140 entsprechend den Lageraufnahmen 140 der Figur 4 zur Aufnahme von Befestigungs- und Lagervorsprüngen 21, 22 des Modulgehäuses auf.

Das Schaumteil 14 kann einstückig mit dem übrigen Lenkradschaum des Lenkrads oder als gesondertes Teil ausgebildet sein. Es stützt sich beispielsweise am Lenkradtopf 12 ab und/oder ist an diesem z.B. über Klebemittel befestigt. Auch kann vorgesehen sein, dass das Schaumteil sich zusätzlich oder alternativ an einer angrenzenden Speiche abstützt. Es wird dabei darauf hingewiesen, dass eine Anordnung des Schaumteils 14 entsprechend der Figur 8 auch für den Fall im oder am Lenkradtopf 12 erfolgen kann, dass angrenzend an das Schaumteil 14 keine Speiche vorgesehen ist, beispielsweise bei einer 6-Uhr-Anordnung des Schaumteils 14 verbunden mit einem 4-Speichen-Lenkrad.

Die Figur 8 zeigt des Weiteren eine Platte 8, die bevorzugt aus Metall besteht und im Bodenbereich 122 des Lenkradtopfes 14 befestigt ist. In die Platte 8 sind zwei Metallklammern bzw. Stahlrastfedern 41, 42 eingeclipst. Dabei entstehen Rastöffnungen 81, 82, in die Befestigungszapfen 31, 32 des Modulgehäuses 1 bei der Montage des Modulgehäuses einrastbar sind.

Die Figur 9 zeigt ein Gassackmodul mit einem Modulgehäuse 1, das im Wesentlichen dem Modulgehäuse 1 der Figuren 1 bis 7 entspricht. Gleiche Bezugszeichen bezeichnen gleiche oder einander entsprechende Teile. Zusätzlich dargestellt ist eine Abdeckung bzw. Kappe 7, die mit dem Modulgehäuse 1 fest verbunden ist. Die Kappe 7 weist eine im montierten Zustand dem Fahrer zugewandte Betätigungsfläche 71 auf. Weiter weist die Kappe Verstärkungssicken 72 zur Erhöhung der Strukturfestigkeit der Kappe 7 auf. In der Figur 9 ist des Weiteren die Bodenplatte 9 eines Gasgenerators des Gassackmoduls zu erkennen.

Als Schwenkmittel sind wie beim Modulgehäuse der Figuren 1 bis 7 zwei Befestigungs- und Lagervorsprünge 21, 22 vorgesehen, die am Modulgehäuse 1 ausgebildet sind. Den Befestigungszapfen 31, 32 zur schwimmenden Lagerung des Modulgehäuses 1 am Lenkrad sind zwei Federelemente 61, 62 zugeordnet, die um die Befestigungszapfen 31, 32 herum, d.h. koaxial zu diesen angeordnet sind.

Bei der Montage des Gassackmoduls schnappen die Befestigungs- und Lagervorsprünge 21, 22 in die Lageraufnahmen 140 des Schaumteils 14 der Figur 8 ein. Des Weiteren sind die Befestigungszapfen 31, 32 mittels der Metallklammern 41, 42 in den Rastöffnungen 81, 82 der Platte 8 des Bodenbereichs 122 verrastbar. Im Falle des Ausübens eines Druckes durch den Fahrer auf die Betätigungsfläche 71 der Modulabdeckung 7 erfährt das Modulgehäuse 1 wie in Bezug auf die Figuren 4 und 5 beschrieben eine Kraft in axialer Richtung, die zu einem Verschwenken des Modulgehäuses um eine Schwenkachse führt, die durch die Befestigungs- und Lagervorsprünge 21, 22 und die Lageraufnahmen 140 gebildet ist.

## Patentansprüche

1. Fahrzeuglenkrad, aufweisend:
- ein Lenkradskelett, das zumindest teilweise mit Lenkradschaum (15) umhüllt ist und einen Lenkradkranz (10) und mehrere Lenkradspeichen (11) umfasst,
- ein in das Lenkrad integriertes Gassackmodul, das ein Modulgehäuse (1) und eine Modulabdeckung (7) umfasst, wobei das Modulgehäuse (1) der Befestigung und/oder Aufnahme eines Gasgenerators und/oder eines Gassacks des Gassackmoduls dient und die Modulabdeckung (7) bei in ein Fahrzeug eingebautem Lenkrad einem Fahrer des Fahrzeugs zugewandt ist,
- elektrische Kontaktmittel (5) zum Auslösen einer Fahrzeughupe,
- am Modulgehäuse (1) ausgebildete Befestigungsmittel (31, 32) zur schwimmenden Lagerung des Modulgehäuses (1) am Lenkrad, und
- am Modulgehäuse (1) ausgebildete, zu den Befestigungsmitteln (31, 32) beabstandet angeordnete Schwenkmittel (21, 22), wobei das Modulgehäuse (1) relativ zum Lenkradskelett verschwenkbar ist und bei einem Verschwenken des Modulgehäuses (1) die elektrischen Kontaktmittel (5) geschlossen werden,
**dadurch gekennzeichnet,**
**dass** die am Modulgehäuse (1) ausgebildeten Schwenkmittel (21, 22) im Lenkradschaum (15) des Lenkrads gelagert sind.

2. Lenkrad nach Anspruch 1, **dadurch gekennzeichnet, dass** die Schwenkmittel (21, 22) an der unteren, einem Fahrer abgewandten Seite (101) des Modulgehäuses (1) an diesem ausgebildet und im Lenkradschaum (15) gelagert sind.

3. Lenkrad nach Anspruch 1 oder 2, **dadurch gekennzeichnet, dass** die Schwenkmittel (21, 22) eine Schwenkbewegung des Modulgehäuses (1) entlang genauer einer Schwenkachse (X) ermöglichen.

4. Lenkrad nach einem der vorangehenden Ansprüche, **dadurch gekennzeichnet, dass** die Schwenkmittel (21, 22) durch mindestens zwei auf einer Achse (X) liegende, voneinander beabstandete, im Lenkradschaum (15) um diese Achse (X) drehbare Befestigungselemente gebildet sind.

5. Lenkrad nach Anspruch 4, **dadurch gekennzeichnet, dass** die Schwenkmittel (21, 22) durch mindestens zwei Elemente des Modulgehäuses gebildet sind, die rastbar mit dem Lenkradschaum (15) verbindbar sind.

6. Lenkrad nach einem der vorangehenden Ansprüche, **dadurch gekennzeichnet, dass** der Lenkradschaum (15) mindestens eine Lageraufnahme (140) zur Lagerung der Schwenkmittel (21, 22) ausbildet.

7. Lenkrad nach einem der vorangehenden Ansprüche, **dadurch gekennzeichnet, dass** die Schwenkmittel (21, 22) im Bereich mindestens einer Speiche (11) im Lenkradschaum (15) gelagert sind.

8. Lenkrad nach einem der vorangehenden Ansprüche, **dadurch gekennzeichnet, dass** die Schwenkmittel (21, 22) im Bereich der Lenkradnabe (12) im Lenkradschaum (15) gelagert sind.

9. Lenkrad nach einem der vorangehenden Ansprüche, **dadurch gekennzeichnet, dass** der Lenkradschaum (15) ein gesondertes Schaumteil (14) für die Lagerung der Schwenkmittel aufweist.

10. Lenkrad einem der vorangehenden Ansprüche, soweit rückbezogen auf Anspruch 3, **dadurch gekennzeichnet, dass** die Befestigungsmittel (31, 32) mindestens zwei Befestigungszapfen aufweisen, die entlang einer Achse angeordnet sind, die parallel zu der Schwenkachse (X) verläuft.

11. Lenkrad nach einem der vorangehenden Ansprüche, **dadurch gekennzeichnet, dass** die Befestigungsmittel (31, 32) mit dem Lenkrad verrastbar sind.

12. Lenkrad nach einem der vorangehenden Ansprüche, **dadurch gekennzeichnet, dass** zur schwimmenden Lagerung des Modulgehäuses (1) am Lenkrad mindestens ein Federelement (6; 61, 62) vorgesehen ist, das sich zwischen dem Modulgehäuse (1) und der Lenkradnabe (12) abstützt und ein federkraftbeaufschlagtes Spiel zur Bewegung des Modulgehäuses (1) relativ zum Lenkrad bereitstellt.

13. Lenkrad nach einem der vorangehenden Ansprüche, **dadurch gekennzeichnet, dass** die Schwenkmitteln (21, 22) durch einstückig am Modulgehäuse (1) ausgebildete Vorsprünge gebildet sind.

14. Lenkrad nach einem der vorangehenden Ansprüche, **dadurch gekennzeichnet, dass** die Schwenkmittel (21, 22) über Schnappverbindungen im Lenkradschaum (15) gelagert sind.

15. Lenkrad nach einem der vorangehenden Ansprüche, **dadurch gekennzeichnet, dass** die Schwenkmittel derart ausgebildet sind, dass eine Schwenkbewegung des Modulgehäuses (1) entlang einer Schwenkachse (X) erfolgt, die senkrecht zur axialen Richtung des Lenkrads verläuft.

## Claims

1. Vehicle steering wheel, having:
- a steering wheel skeleton, which is at least partially coated with steering wheel foam (15) and which comprises a steering wheel rim (10) and multiple steering wheel spokes (11),
- an air bag module, integrated into the steering wheel, comprising a module casing (1) and a module cover (7), wherein the module casing (1) serves to fasten and/or house a gas generator and/or an air bag of the air bag module, and the module cover (7) faces a driver of a vehicle when the steering wheel is installed in the vehicle,
- electrical contact means (5) to trigger a vehicle horn,
- fastening means (31, 32), designed on the module casing (1), for the floating bearing of the module casing (1) on the steering wheel, and
- pivoting means (21, 22), which are designed on the module casing (1) and are arranged spaced apart from the fastening means (31, 32), wherein the module casing (1) can be pivoted relative to the steering wheel skeleton and the electrical contact means (5) are closed upon pivoting the module casing (1),
**characterized**
**in that** the pivoting means (21, 22), designed on the module casing (1), are mounted in the steering wheel foam (15) of the steering wheel.

2. Steering wheel according to Claim 1, **characterized in that** the pivoting means (21, 22) are designed on the module casing (1) on its lower side (101), which is turned away from a driver, and are mounted in the steering wheel foam (15).

3. Steering wheel according to Claim 1 or 2, **characterized in that** the pivoting means (21, 22) allow for a pivoting movement of the module casing (1) along exactly one swivel axis (X).

4. Steering wheel according to any of the preceding claims, **characterized in that** the pivoting means (21, 22) are formed by at least two fastening elements, lying on an axis (X) and spaced apart from each other, which can be rotated around this axis (X) in the steering wheel foam (15).

5. Steering wheel according to Claim 4, **characterized in that** the pivoting means (21, 22) are formed by at least two elements of the module casing, which can be connected lockable to the steering wheel foam (15).

6. Steering wheel according to any of the preceding claims, **characterized in that** the steering wheel foam (15) forms at least one bearing housing (140) for mounting the pivoting means (21, 22).

7. Steering wheel according to any of the preceding claims, **characterized in that** the pivoting means (21, 22) are mounted in the area of at least one spoke (11) in the steering wheel foam (15).

8. Steering wheel according to any of the preceding claims, **characterized in that** the pivoting means (21, 22) are mounted in the area of the steering wheel hub (12) in the steering wheel foam (15).

9. Steering wheel according to any of the preceding claims, **characterized in that** the steering wheel foam (15) has a separate foam part (14) for mounting the pivoting means.

10. Steering wheel according to any of the preceding claims, as far as referring back to Claim 3, **characterized in that** the fastening means (31, 32) have at least two fastening pins, arranged along an axis which runs parallel to the swivel axis (X).

11. Steering wheel according to any of the preceding claims, **characterized in that** the fastening means (31, 32) can be locked in place with the steering wheel.

12. Steering wheel according to any of the preceding claims, **characterized in that** for the floating bearing of the module casing (1) on the steering wheel at least one spring element (6; 61, 62) is provided, which rests between the module casing (1) and the steering wheel hub (12) and which provides a spring force loaded tolerance for the movement of the module casing (1) relative to the steering wheel.

13. Steering wheel according to any of the preceding claims, **characterized in that** the pivoting means (21, 22) are formed by protrusions designed in one piece on the module casing (1).

14. Steering wheel according to any of the preceding claims, **characterized in that** the pivoting means (21, 22) are mounted in the steering wheel foam (15) via snap fits.

15. Steering wheel according to any of the preceding claims, **characterized in that** the pivoting means are designed in such a way that a pivoting movement of the module casing (1) is made along a swivel axis (X) which runs vertical to the axial direction of the steering wheel.

## Revendications

1. Volant de véhicule, comprenant :
- un squelette de volant, lequel est enveloppé au moins en partie d'une mousse pour volant (15) et comprend une couronne de volant (10) et plusieurs rayons de volant (11),
- un module de coussin gonflable intégré dans le volant, lequel comprend un boîtier de module (1) et un couvercle de module (7), le boîtier de module (1) servant à la fixation et/ou à la réception d'un générateur de gaz et/ou d'un coussin gonflable du module de coussin gonflable, et le couvercle de module (7), en cas de volant monté dans un véhicule, étant tourné vers un conducteur du véhicule,
- des moyens de contact électriques (5) pour le déclenchement d'un avertisseur de véhicule,
- des moyens de fixation (31, 32) formés sur le boîtier de module (1) pour le montage flottant du boîtier de module (1) sur le volant, et
- des moyens de pivotement (21, 22) formés sur le boîtier de module (1), disposés de manière espacée par rapport aux moyens de fixation (31, 32), le boîtier de module (1) pouvant pivoter par rapport au squelette de volant et, lors d'un pivotement du boîtier de module (1), les moyens de contact électriques (5) étant fermés,
**caractérisé en ce que**
les moyens de pivotement (21, 22) formés sur le boîtier de module (1) sont montés dans la mousse de volant (15) du volant.

2. Volant selon la revendication 1, **caractérisé en ce que** les moyens de pivotement (21, 22) sont formés sur le côté (101) inférieur tournant le dos à un conducteur du boîtier de module (1) sur celui-ci et sont montés dans la mousse de volant (15).

3. Volant selon la revendication 1 ou 2, **caractérisé en ce que** les moyens de pivotement (21, 22) permettent un mouvement de pivotement du boîtier de module (1) le long d'exactement un axe de pivotement (X).

4. Volant selon l'une des revendications précédentes, **caractérisé en ce que** les moyens de pivotement (21, 22) sont formés par au moins deux éléments de fixation situés sur un axe (X), espacés l'un de l'autre, pouvant tourner autour de cet axe (X) dans la mousse de volant (15).

5. Volant selon la revendication 4, **caractérisé en ce que** les moyens de pivotement (21, 22) sont formés par au moins deux éléments du boîtier de module, lesquels peuvent être reliés par encliquetage à la mousse de volant (15).

6. Volant selon l'une des revendications précédentes, **caractérisé en ce que** la mousse de volant (15) forme au moins un logement de montage (140) pour le montage des moyens de pivotement (21, 22).

7. Volant selon l'une des revendications précédentes, **caractérisé en ce que** les moyens de pivotement (21, 22) sont montés dans la zone d'au moins un rayon (11) dans la mousse de volant (15).

8. Volant selon l'une des revendications précédentes, **caractérisé en ce que** les moyens de pivotement (21, 22) sont montés dans la zone du moyeu de volant (12) dans la mousse de volant (15).

9. Volant selon l'une des revendications précédentes, **caractérisé en ce que** la mousse de volant (15) présente un élément de mousse (14) distinct pour le montage des moyens de pivotement.

10. Volant selon l'une des revendications précédentes, dans la mesure où elle se réfère à la revendication 3, **caractérisé en ce que** les moyens de fixation (31, 32) présentent au moins deux tenons de fixation disposés le long d'un axe, lequel s'étend parallèlement à l'axe de pivotement (X).

11. Volant selon l'une des revendications précédentes, **caractérisé en ce que** les moyens de fixation (31, 32) peuvent s'encliqueter avec le volant.

12. Volant selon l'une des revendications précédentes, **caractérisé en ce que**, pour le montage flottant du boîtier de module (1) sur le volant, au moins un élément élastique (6 ; 61, 62) est prévu, lequel est en appui entre le boîtier de module (1) et le moyeu de volant (12) et met à disposition un jeu soumis à l'effet d'une force élastique pour faire bouger le boîtier de module (1) par rapport au volant.

13. Volant selon l'une des revendications précédentes, **caractérisé en ce que** les moyens de pivotement (21, 22) sont formés par des saillies formées d'un seul tenant sur le boîtier de module (1).

14. Volant selon l'une des revendications précédentes, **caractérisé en ce que** les moyens de pivotement (21, 22) sont montés, via des liaisons par encliquetage, dans la mousse de volant (15).

15. Volant selon l'une des revendications précédentes, **caractérisé en ce que** les moyens de pivotement sont formés de manière à ce qu'un mouvement de pivotement du boîtier de module (1) s'effectue le long d'un axe de pivotement (X), lequel s'étend perpendiculairement à la direction axiale du volant.
